# FASCICULE DE BREVET EUROPEEN

(11) **EP 0 722 849 B1**
(45) Date de publication et mention de la délivrance du brevet: **24.03.1999**
(21) Numéro de dépôt: 96400160.6
(22) Date de dépôt: 23.01.1996
(51) Int. Cl.: B60B 33/02

(54) **Roulette pivotante à blocage directionnel à couple réglable**
Lenkrolle mit einstellbarer Richtungsverriegelung
Castor with adjustable locking of steering

(30) Priorité: 23.01.1995 FR 9500701
(43) Date de publication de la demande: 24.07.1996
(73) Titulaire: GUITEL-ETIENNE MOBILOR, F-93310 Le Pré Saint-Gervais (FR)
(72) Inventeur: Hrabina, Jean, F-93600 Aulnay sous Bois (FR); Casse, Rodolph, F-77340 Pontault Combault (FR)
(74) Mandataire: Le Bras, Hervé

(56) Documents cités:
- EP-A- 0 352 380
- DE-A- 2 640 016
- DE-A- 3 917 291
- FR-A- 2 703 300
- US-A- 2 505 852

## Description

La présente invention concerne une roulette pivotante à blocage directionnel comportant une roue pivotable autour d'un axe de pivotement vertical sensiblement orthogonal à l'axe de rotation de la roue et décalé par rapport à ce dernier, un palier de support présentant au moins une cuvette annulaire renversée qui, par sa partie centrale, est fixée sur l'extrémité inférieure dudit axe de pivotement, une chape de support présentant au moins une joue latérale dont l'extrémité inférieure porte ladite roue et présentant également une jupe disposée autour de l'extrémité inférieure de l'axe de pivotement, ladite jupe étant raccordée à l'extrémité supérieure de ladite joue et coopérant avec les organes de roulement dudit palier, une lame à ressort disposée dans l'espace compris entre le palier de support et la bande de roulement de la roue et articulée par sa partie médiane sur la chape, ladite lame à ressort comportant une première extrémité en appui sur la jupe et une deuxième extrémité comportant un verrou de blocage en appui coulissant sur le bord inférieur de la cuvette et susceptible de s'engager dans une dépression prévue sur ledit bord inférieur, et des moyens de réglage de la tension de la lame à ressort.

Une telle roulette est décrite dans la demande de brevet français publiée sous le numéro FR-A-2 703 300. Ce document montre à la figure 6 une vis de réglage dont la tige est en appui sur le bord inférieur de la jupe et dont la partie filetée coopère avec un taraudage prévu dans la première extrémité de la lame à ressort. Les surfaces d'appui de la vis sur le bord inférieur de la jupe sont relativement faibles du fait de la faible épaisseur de la jupe. Il peut se produire un matage de l'extrémité de la vis qui peut entraîner un dysfonctionnement du dispositif de réglage de la tension de la lame à ressort.

Le but de la présente invention est de pallier ces inconvénients.

L'invention atteint son but par le fait que la lame à ressort est articulée sur un arbre parallèle à l'axe de rotation de la roue et par le fait que les moyens de réglage de la tension de la lame à ressort sont interposés entre ladite lame à ressort et ledit arbre.

Avantageusement, les moyens de réglage de tension comportent une came prismatique montée à rotation sur ledit arbre et présentant des plats d'appui pour la lame à ressort, lesdits plats d'appui comportant au moins un picot susceptible de coopérer avec une dépression ménagée dans la partie médiane de la lame à ressort. Cette came prismatique comporte, au moins à l'une de ses extrémités, une tête polygonale pour permettre la rotation de la came à l'aide d'une clé à fourche.

Selon une variante de réalisation, il est prévu, entre la lame à ressort et la came, un étrier solidaire de la lame à ressort et dont les extrémités peuvent coulisser sur l'arbre d'articulation.

Selon un autre mode de réalisation, les moyens de réglage de tension comportent un ensemble vis-écrou interposé entre l'arbre d'articulation et la lame à ressort.

D'autres avantages et caractéristiques de l'invention ressortiront à la lecture de la description suivante faite à titre d'exemple et en référence aux dessins annexés dans lesquels :
la figure 1 est une vue en élévation latérale et en coupe verticale partielle d'une roulette munie de moyens de blocage directionnel et de moyens de réglage de la tension du ressort conforme à l'invention ;
la figure 2 est une vue frontale partielle montrant les moyens de blocage de la roulette pivotante ;
la figure 3 montre à plus grande échelle les moyens de blocage de la roulette de la figure 1, ainsi que les moyens de réglage de la tension de la lame à ressort selon un premier mode de réalisation ;
la figure 4 est une vue en perspective d'une variante de réalisation des moyens de réglage de tension de la figure 3;
la figure 5 montre en perspective les moyens de réglage de tension selon un deuxième mode de réalisation ;
la figure 6 montre en perspective les moyens de réglage de tension selon un troisième mode de réalisation, et
la figure 7 est une coupe, selon le plan de symétrie, des moyens de réglage de tension de la figure 6.

La roulette 1 représentée sur les dessins comporte une roue 2 qui est susceptible de pouvoir pivoter autour d'un axe vertical de pivotement 3 sensiblement orthogonal à l'axe de rotation horizontal 4 de la roue 2. Les extrémités de l'axe de rotation 4 sont portées par au moins une joue latérale, et de préférence deux joues latérales 5, d'une chape 6 dont la partie supérieure se présente sous la forme d'une jupe 7 montée par l'intermédiaire d'un palier de support 8 sur l'extrémité inférieure de l'axe vertical de pivotement 3.

Dans le présent descriptif, par axe de pivotement il faut entendre toute tige ou platine destinée à fixer la roulette 1 sur un chariot ou autre plate-forme mobile non représenté sur le dessin.

Comme on peut le voir sur les dessins, le palier de support 8 comprend une première cuvette annulaire 9 et une deuxième cuvette annulaire 10 fixée comme la première, rigidement sur l'extrémité inférieure de l'axe de pivotement 3. Les deux cuvettes 9 et 10 sont ouvertes vers le bas. La première cuvette 9 est disposée au-dessus de la deuxième cuvette 10 et présente une jupe extérieure en forme de cloche 9a, à laquelle se raccorde à la partie supérieure, un fond annulaire retourné vers le bas 9b qui, dans la zone d'ouverture intérieure repose sur le fond annulaire 10a de la cuvette inférieure 10. Les deux cuvettes 9, 10 sont fixées sur l'axe de pivotement 3 et sont enserrées par leurs bords intérieurs entre deux épaulements annulaires 3a, 3b de l'axe vertical 3. A son extrémité inférieure, cette cuvette inférieure 10 possède un rebord annulaire 10b qui, par sa face supérieure, sert de piste de roulement à une première série de billes de roulement ou organes analogues 11 sur laquelle prend appui la jupe 7 de la chape de support 6. Dans la zone de jonction annulaire entre la cloche 9a et le fond annulaire 9b, la cuvette supérieure 9 délimite une piste de roulement en forme de gorge 12 dans laquelle est logée une deuxième série de billes de roulement 13 reposant sur la face supérieure de la jupe 7. La cuvette supérieure 9 entoure et recouvre la jupe 7 et la cuvette inférieure 10.

La roulette pivotante 1 comporte également des moyens de blocage 16 de la chape 6 au moins dans une direction prédéterminée par rapport à l'axe de pivotement 3.

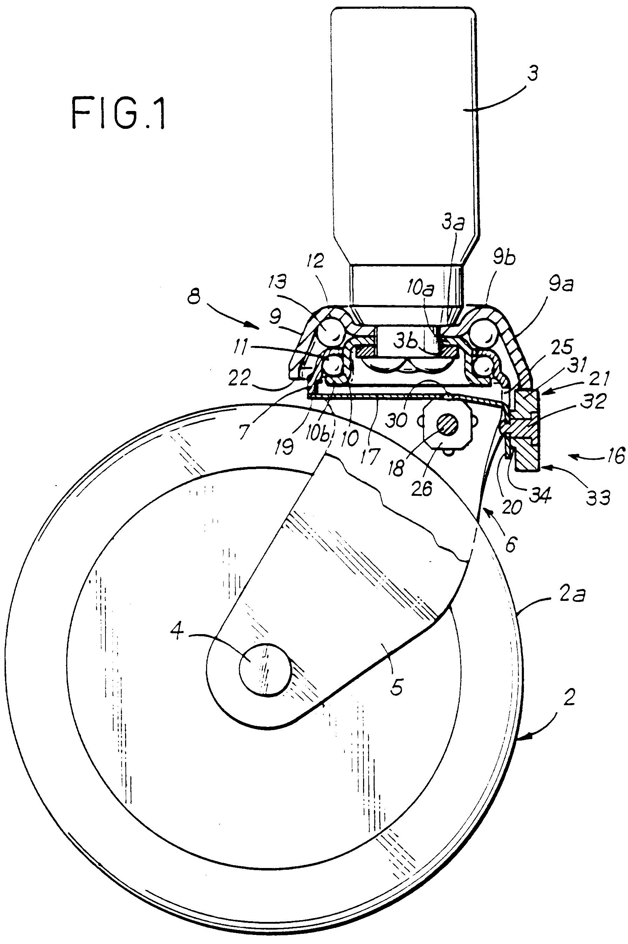

Selon le mode de réalisation représenté sur la figure 1, les moyens de blocage 16 comportent une lame à ressort 17 de forme généralement plane et disposée dans l'espace compris entre le palier de support 8 et la bande de roulement 2a de la roue 2. La lame à ressort 17 est articulée par sa partie médiane sur la chape 6 par l'intermédiaire d'un axe d'articulation 18 sensiblement parallèle à l'axe de rotation 4 de la roue 2. Une première extrémité 19 de la lame à ressort 17 est en appui sur le bord inférieur de la jupe 7 tandis que son autre extrémité 20 comporte un verrou de blocage 21 qui est maintenu en appui sur le bord inférieur libre 22 de la cuvette supérieure 9. Ce bord 22 comporte au moins une dépression 23 adaptée à la forme du verrou de blocage 21 et réalisée sous la forme d'une encoche présentant des rampes 24 latérales inclinées à 45°, afin de permettre le déblocage du pivotement de la roue 2 en exerçant un couple de rotation sur la chape 6 ou l'axe de pivotement 3.

La jupe 7 comporte au voisinage du verrou de blocage 21, une encoche 25 de forme rectangulaire destinée à guider l'extrémité 20 de la lame à ressort 17.

Comme on le voit sur les figures 1 à 5, l'extrémité 20 de la lame à ressort 17 est cambrée vers le bas. Le verrou de blocage 21 est constitué d'un galet 31 monté à rotation libre sur un axe de galet 32 fixé sur l'extrémité cambrée 20 de la lame à ressort. Le galet 31 comporte un lamage destiné à recevoir la tête de l'axe de galet 32, évitant ainsi toute partie en saillie sur la face arrière 33 du galet 31. Un épaulement 34 sur la face avant du galet 31, situé en regard de l'extrémité 20 de la lame à ressort élimine le contact du galet 31 avec la chape 6. Le galet 31 est disposé dans un plan sensiblement vertical et parallèle à l'extrémité 20 de la lame à ressort. Ainsi la périphérie du galet 31 est en contact précis avec le bord inférieur 22 de la cuvette 9.

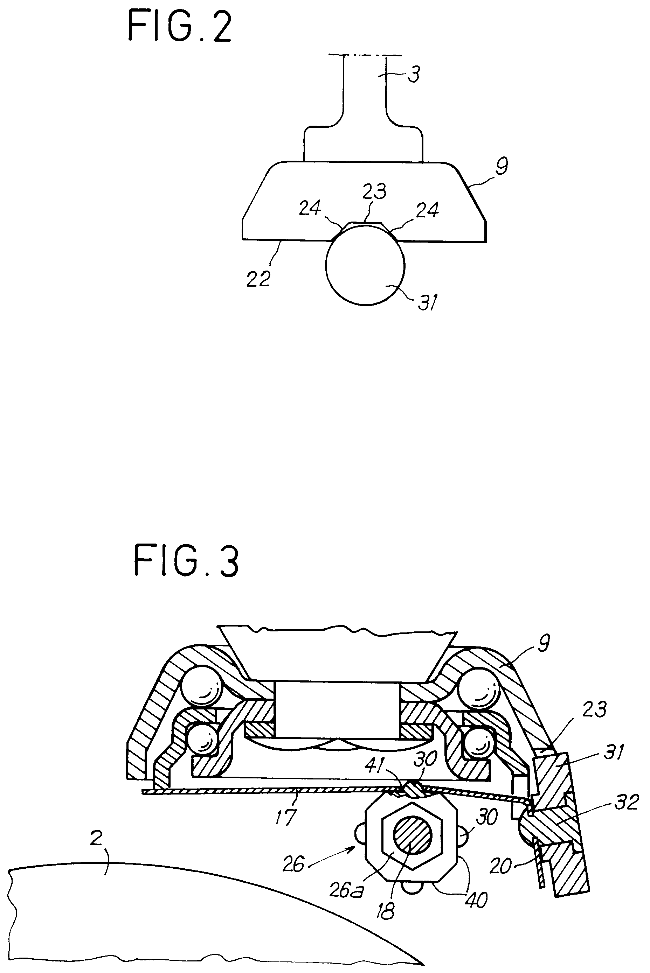

Comme on le voit sur les figures 1 et 3, la lame à ressort 17 est montée sur l'axe d'articulation 18 au moyen d'une came prismatique 26 dont les plats 40 comportent au moins un picot 30 qui est susceptible de coopérer avec une dépression 41 ou trou ménagé dans la partie médiane de la lame à ressort. La came prismatique 26 comporte par exemple 4 plats d'appui 40 disposés à des distances différentes de l'axe d'articulation 18. La came 26 est montée sur l'axe d'articulation 18 de telle manière qu'elle puisse être pivotée d'un multiple de 90° par rapport à la chape 6. La came 26 s'étend le long de l'axe d'articulation 18 sur une longueur au moins égale de la largeur de la partie médiane de la lame à ressort 17. Au moins l'une des extrémités de la came 26 présente une tête polygonale 26a à six pans qui permet la rotation de la came 26 à l'aide d'une clé à fourche.

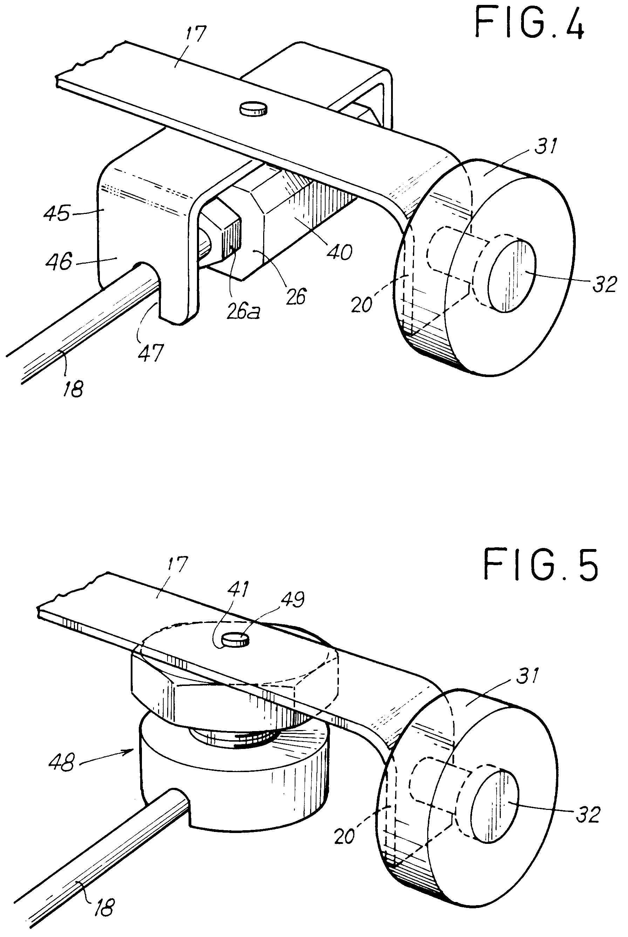

La variante de réalisation représentée sur la figure 4 est identique au mode de réalisation représenté sur la figure 3, si ce n'est qu'un étrier 45 est interposé entre la partie médiane de la lame à ressort 17 et la came 26. L'étrier 45 est solidaire de la lame à ressort 17, et ses extrémités 46 présentant des encoches 47 dans lesquelles loge l'axe d'articulation 18. L'étrier 45 est ainsi monté coulissant sur l'arbre 18. La disposition des encoches 47 empêche le déplacement radial de la lame à ressort 17, lorsqu'on fait pivoter la came prismatique 26 autour de l'arbre 18.

La figure 5 montre un deuxième mode de réalisation des moyens de réglage de la tension de la lame à ressort 17. Ici il est prévu un ensemble vis-écrou 48 entre l'axe d'articulation 18 et la partie médiane de la lame à ressort 17. La vis comporte un picot 49 qui traverse un trou 41 de la lame à ressort 17.

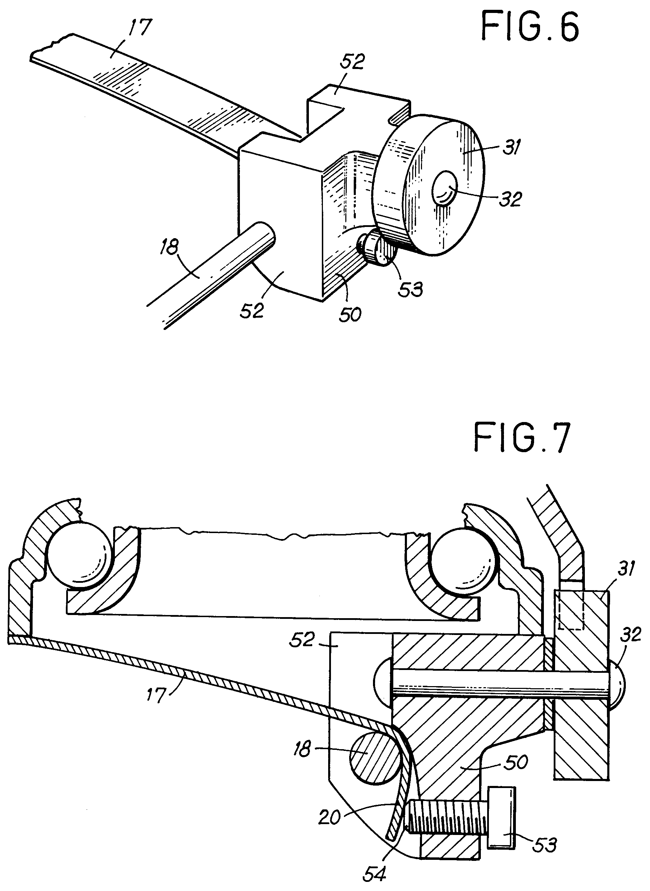

Dans le troisième mode de réalisation montré sur les figures 6 et 7, la lame à ressort 17 dont l'extrémité 20 est cambrée vers le bas est en appui direct sur l'axe d'articulation 18.

Le galet 31 est monté à rotation libre sur un axe de galet 32, lequel est porté par un basculeur 50 monté pivotant sur l'axe d'articulation 18 au moyen de bras 52 qui s'étendent latéralement à partir du corps du basculeur 50 de chaque côté de la lame à ressort 17. Le corps du basculeur 50 porte une vis de réglage 53 dont l'extrémité 54 est en appui sur l'extrémité 20 de la lame à ressort 17.

## Revendications

1. Roulette pivotante à blocage directionnel comportant un roue (2) pivotable autour d'un axe de pivotement (3) vertical sensiblement orthogonal à l'axe de rotation (4) de la roue (2) et décalé par rapport à ce dernier, un palier de support (8) présentant au moins une cuvette annulaire (9) renversée qui, par sa partie centrale, est fixée sur l'extrémité inférieure dudit axe de pivotement (3), une chape de support (6) présentant au moins une joue latérale (5) dont l'extrémité inférieure porte ladite roue (2) et présentant également une jupe (7) disposée autour de l'extrémité inférieure de l'axe de pivotement (3), ladite jupe (7) étant raccordée à l'extrémité supérieure de ladite joue (5) et coopérant avec les organes de roulement (11, 13) dudit palier (8), une lame à ressort (17) disposée dans l'espace compris entre le palier de support (8) et la bande de roulement (2a) de la roue (2) et articulée par sa partie médiane sur la chape (6), ladite lame à ressort (17) comportant une première extrémité (19) en appui sur la jupe (7) et une deuxième extrémité (20) équipée d'un verrou de blocage (21) en appui coulissant sur le bord inférieur (22) de la cuvette (9) et susceptible de s'engager dans une dépression (23) prévue sur ledit bord inférieur (23), et des moyens de réglage de la tension de la lame à ressort, caractérisée par le fait que la lame à ressort (17) est articulée sur un arbre (18) parallèle à l'axe de rotation (4) de la roue (2) et par le fait que les moyens de réglage de la tension de la lame à ressort (17) sont interposés entre ladite lame à ressort (17) et ledit arbre (18).

2. Roulette selon la revendication 1, caractérisée par le fait que les moyens de réglage de tension comportent une came prismatique (26) montée à rotation sur ledit arbre (18) et présentant des plats d'appui (40) pour la lame à ressort, lesdits plats d'appui (40) comportant au moins un picot (30) susceptible de coopérer avec une dépression (41) ménagée dans la partie médiane de la lame à ressort (17).

3. Roulette selon la revendication 2, caractérisée par le fait que la came prismatique (26) comporte, au moins à l'une de ses extrémités, une tête polygonale (26a) pour permettre la rotation de la came (26) à l'aide d'une clé à fourche.

4. Roulette selon l'une des revendications 2 ou 3, caractérisée par le fait qu'il est prévu entre la lame à ressort (17) et ladite came (26), un étrier (45) solidaire de la lame à ressort (17) et dont les extrémités (46) peuvent coulisser sur l'arbre d'articulation (18).

5. Roulette selon la revendication 1, caractérisée par le fait que lesdits moyens de réglage de tension comportent un ensemble vis-écrou (48) interposé entre l'arbre d'articulation (18) et la lame à ressort.

6. Roulette selon l'une des revendications 2 à 5, caractérisée par le fait que le verrou de blocage comporte un galet (31) monté à rotation libre autour d'un axe de galet (32) et par le fait que ledit axe de galet (32) est fixé sur une extrémité cambrée (20) de la lame à ressort (17).

7. Roulette selon la revendication 1, caractérisée par le fait que le verrou de blocage comporte un galet (31) monté à rotation libre sur un basculeur (50), ledit basculeur (50) étant articulé sur l'arbre d'articulation (18) de la lame à ressort (17) et par le fait que les moyens de réglage de tension comportent une vis de réglage (53) portée par ledit basculeur (50) et en appui sur la deuxième extrémité (20) de la lame à ressort (17).

## Claims

1. Pivoting castor with directional locking comprising a wheel (2) that can be pivoted about a vertical pivotal axis (3) substantially orthogonal to the axis of rotation (4) of the wheel (2) and offset in relation to the latter, a support bearing (8) having at least one annular inverted bowl (9) that is fastened by its central portion to the lower end of said pivotal axis (3), a supporting fork joint (6) having at least one lateral cheek (5), the lower end of which carries said wheel (2) and also having a skirt (7) arranged around the lower end of the pivotal axis (3), said skirt (7) being connected to the upper end of said cheek (5) and co-operating with the bearing members (11, 13) of said bearing (8), a spring blade (17) arranged in the space between the support bearing (8) and the running tread (2a) of the wheel (2) and articulated by its median portion to the fork joint (6), said spring blade (17) comprising a first end (19) bearing against the skirt (7) and a second end (20) fitted with a locking bolt (21) bearing, so as to slide, against the lower edge (22) of the bowl (9) and capable of engaging in a depression (23) made in said lower edge (22), and means for adjusting the tension of the spring blade,
characterised by the fact that the spring blade (17) is hinged to a shaft (18) parallel to the axis of rotation (4) of the wheel (2) and by the fact that the means for adjusting the tension of the spring blade (17) are placed between said spring blade (17) and said shaft (18).

2. Castor according to Claim 1, characterised by the fact that the means for adjusting tension comprise a prismatic cam (26) rotatably mounted on said shaft (18) and having bearing faces (40) for the spring blade, said bearing faces (40) comprising at least one pin (30) capable of co-operating with a depression (41) made in the median portion of the spring blade (17).

3. Castor according to Claim 2, characterised by the fact that the prismatic cam (26) comprises, at least at one of its ends, a polygonal head (26a) to allow the cam (26) to be rotated with the aid of a fork wrench.

4. Castor according to one of Claims 2 or 3, characterised by the fact that, between the spring blade (17) and said cam (26), a caliper (45) is provided, fixed to the spring blade (17), and the ends of which (46) can slide over the hinge shaft (18).

5. Castor according to Claim 1, characterised by the fact that said means for adjusting tension comprise a screw-nut assembly (48) placed between the hinge shaft (18) and the spring blade.

6. Castor according to one of Claims 2 to 5, characterised by the fact that the locking bolt comprises a roller (31) freely rotatably mounted about a roller spindle (32) and by the fact that said roller spindle (32) is fastened to a cambered end (20) of the spring blade (17).

7. Castor according to Claim 1, characterised by the fact that the locking bolt comprises a roller (31) freely rotatably mounted on a rocker (50), said rocker (50) being articulated to the hinge shaft (18) of the spring blade (17) and by the fact that the means for adjusting tension comprise an adjustment screw (53) carried by said rocker (50) and bearing on the second end (20) of the spring blade (17).

## Patentansprüche

1. Lenkrolle mit Richtungsverriegelung mit einem Rad (2), das um eine vertikale Schwenkache (3) schwenkbar ist, die sich im wesentlichen rechtwinklig zur Drehachse (4) des Rades (2) erstreckt und gegenüber dieser versetzt ist, einem Stützlager (8), das mindestens eine umgekehrte ringförmige Schale (9) bildet, die mit ihrem Mittelteil auf dem unteren Ende der Schwenkachse (3) befestigt ist, einem tragenden Gabelstück (6), das mindestens eine Seitenwange (5) bildet, deren unterer Endbereich das Rad (2) trägt und auch eine um den unteren Teil der Schwenkachse (3) angeordnete Schürze (7) bildet, die mit dem oberen Ende der Wange (5) verbunden ist und mit den Wälzkörpern (11,13) des Lagers (8) zusammenwirkt, einer Blattfeder (17), die in dem zwischen dem Stützlager (8) und dem Radreifen (2a) des Rades (2) umfaßten Raum angeordnet ist und durch ihren Mittelteil am Gabelstück (6) angelenkt ist, und einen auf der Schürze (7) abgestützten ersten Endbereich (19) und einen mit einem Blockierriegel (21) ausgestatteten zweiten Endbereich (20) hat, der sich auf einem unteren Rand (22) der Schale (9) gleitend abstützt und in eine am unteren Rand (22) ausgebildete Vertiefung (23) einzugreifen vermag, und Mitteln zum Einstellen der Spannung der Blattfeder,
dadurch gekennzeichnet, daß die Blattfeder (17) an einer zur Drehachse (4) des Rades (2) parallelen Welle (18) angelenkt ist, und die Mittel zum Einstellen der Spannung der Blattfeder (17) zwischen der Blattfeder (17) und der Welle (18) angeordnet sind.

2. Rolle nach Anspruch 1,
dadurch gekennzeichnet, daß die Mittel zum Einstellen der Spannung einen prismatischen Nocken (26) aufweisen, der auf der Welle (18) drehbar angebracht ist und für die Blattfeder (17) Abstützflächen (40) bildet, die mindestens einen Dorn (30) aufweisen, der mit einer im Mittelteil der Blattfeder (17) ausgebildeten Vertiefung (41) zusammenwirken kann.

3. Rolle nach Anspruch 2,
dadurch gekennzeichnet, daß der prismatische Nocken (26) an mindestens einem seiner Enden einen mehrkantigen Kopf (26a) aufweist, um ein Drehen des Nockens (26) mit Hilfe eines Gabelschlüssels zu ermöglichen.

4. Rolle nach Anspruch 2 oder 3,
dadurch gekennzeichnet, daß zwischen der Blattfeder (17) und dem Nocken (26) ein mit der Blattfeder (17) festverbundener Bügel (45) vorgesehen ist, dessen Enden (46) auf der Anlenkungswelle (18) gleiten können.

5. Rolle nach Anspruch 1,
dadurch gekennzeichnet, daß die Mittel zum Einstellen der Spannung eine Schrauben-Mutter-Kombination (48) aufweisen, die zwischen der Anlenkungswelle (18) und der Blattfeder angeordnet ist.

6. Rolle nach einem der Ansprüche 2 bis 5,
dadurch gekennzeichnet, daß der Blockierriegel (21) einen um eine Rollkörperachse (32) frei drehbar angebrachten Rollkörper (31) aufweist, und daß die Rollkörperachse (32) auf einem gewölbtem Endbereich (20) der Blattfeder (17) befestigt ist.

7. Rolle nach Anspruch 1,
dadurch gekennzeichnet, daß der Blockierriegel (21) einen auf einer Wippe (50) frei drehbar gelagerten Rollkörper (31) umfaßt, wobei die Wippe (50) auf der Anlenkungswelle (18) der Blattfeder (17) gelenkig gelagert ist, und dadurch, daß die Mittel zum Einstellen der Spannung eine Einstellschraube (53) aufweisen, die durch die Wippe (50) gehalten ist und sich auf dem zweiten Endbereich (20) der Blattfeder (17) abstützt.
